# EUROPEAN PATENT SPECIFICATION

(11) **EP 4 195 685 B1**
(45) Date of publication and mention of the grant of the patent: **05.08.2026**
(21) Application number: 20953202.7
(22) Date of filing: 08.09.2020
(51) Int. Cl.: G06F 3/0346, G08C 17/02

(54) **INFORMATION PROCESSING APPARATUS AND INFORMATION PROCESSING METHOD**
INFORMATIONSVERARBEITUNGSVORRICHTUNG UND INFORMATIONSVERARBEITUNGSVERFAHREN
APPAREIL DE TRAITEMENT D'INFORMATIONS ET PROCÉDÉ DE TRAITEMENT D'INFORMATIONS

(43) Date of publication of application: 14.06.2023
(73) Proprietor: Sony Group Corporation, Tokyo 108-0075 (JP)
(72) Inventor: NARUSE, Tetsuya, Tokyo 140-0002 (JP)
(74) Representative: D Young & Co LLP
(86) International application number: PCT/JP2020/033972
(87) International publication number: WO 2022/054134

(56) References cited:
- EP-A1- 3 176 766
- WO-A1-2008/149991
- WO-A1-2014/103365
- JP-A- 2006 013 565
- JP-A- H07 302 148
- JP-A- H08 275 259
- JP-A- H10 257 576
- US-A1- 2019 096 234

## Description

### Field

The present disclosure relates to an information processing device and an information processing method.

### Background

Conventionally, there has been a system including information equipment that transmits information such as a television and a controller for controlling such information equipment. In the system of this type, there is a pointing technique for changing a cursor position on a screen on the information equipment side by transmitting upper, lower, left, and right relative positions from a controller to the information equipment by infrared or wireless communication (see, for example, Patent Literature 1).

### Citation List

### Patent Literature

Patent Literature 1: Japanese Patent No. 5338662. Cited references include EP 3176766 A1 and US 2019/096234 A1.

### Summary

### Technical Problem

However, in the related art, a dedicated controller is required for each piece of information equipment. In the pointing technique, when light is used, if an obstacle is present between the information equipment and the controller, a pointing function itself sometimes does not function. As explained above, in the related art, there is room of improvement in controlling the information equipment with high accuracy.

Therefore, the present disclosure proposes an information processing device and an information processing method that can equipment with high accuracy.

### Solution to Problem

The invention is defined by the claims.

### Brief Description of Drawings

FIG. 1 is a diagram illustrating an overview of an information processing method according to a first embodiment.
FIG. 2 is a block diagram illustrating a configuration example of an instruction device according to the first embodiment.
FIG. 3 is a block diagram illustrating a configuration example of a controlled device according to the first embodiment.
FIG. 4 is a flowchart illustrating a procedure of processing executed by the instruction device according to the first embodiment.
FIG. 5 is a diagram illustrating an overview of an information processing method according to a second embodiment.
FIG. 6 is a block diagram illustrating a configuration example of an instruction device according to the second embodiment.
FIG. 7 is a block diagram illustrating a configuration example of a control device according to the second embodiment.
FIG. 8 is a block diagram illustrating a configuration example of a controlled device according to the second embodiment.
FIG. 9 is a flowchart illustrating a procedure of processing executed by the instruction device according to the second embodiment.
FIG. 10 is a diagram illustrating an overview of an information processing method according to a third embodiment.
FIG. 11 is a block diagram illustrating a configuration example of an instruction device according to the third embodiment.
FIG. 12 is a block diagram illustrating a configuration example of a controlled device according to the third embodiment.
FIG. 13A is a diagram illustrating specifying processing for a pointed position by the controlled device.
FIG. 13B is a diagram illustrating the specifying processing for a pointed position by the controlled device.
FIG. 13C is a diagram illustrating the specifying processing for a pointed position by the controlled device.
FIG. 13D is a diagram illustrating the specifying processing for a pointed position by the controlled device.
FIG. 14 is a flowchart illustrating a procedure of processing executed by the instruction device according to the third embodiment.

### Description of Embodiments

Embodiments of the present disclosure are explained in detail below with reference to the drawings. Note that, in the embodiments explained below, redundant explanation is omitted by denoting the same parts with the same reference numerals and signs.

In the present specification and the drawings, a plurality of components having substantially the same functional configuration may be distinguished by adding different numbers after the same reference signs. However, when it is not particularly necessary to distinguish each of a plurality of components having substantially the same functional configuration, only the same reference numeral is added.

The present disclosure is explained according to the following item order.
1. First Embodiment
2. Second Embodiment
3. Third **c**laimed Embodiment
5. Summary

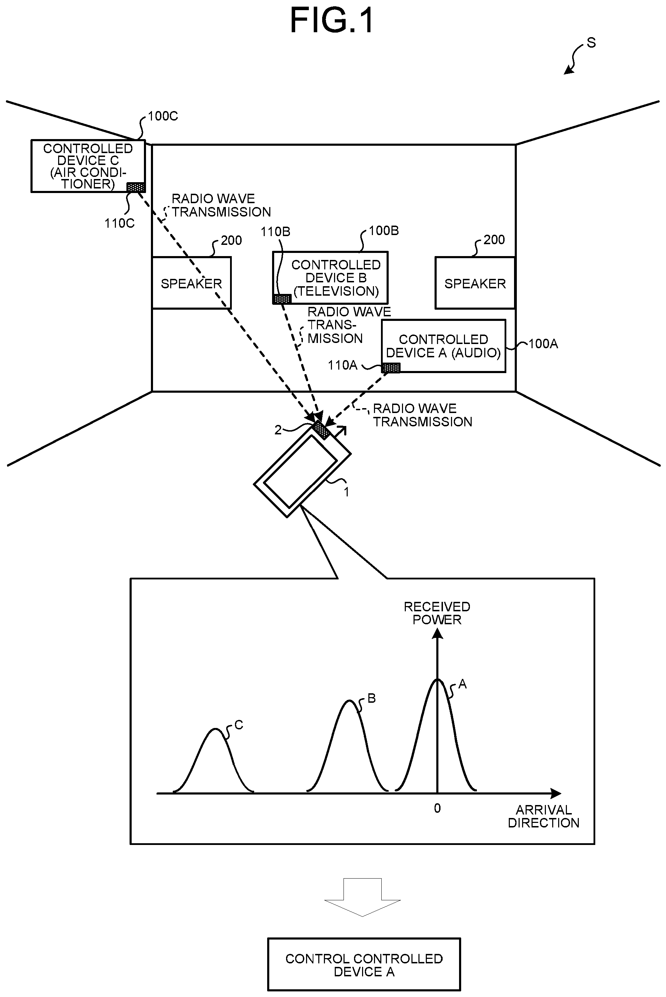

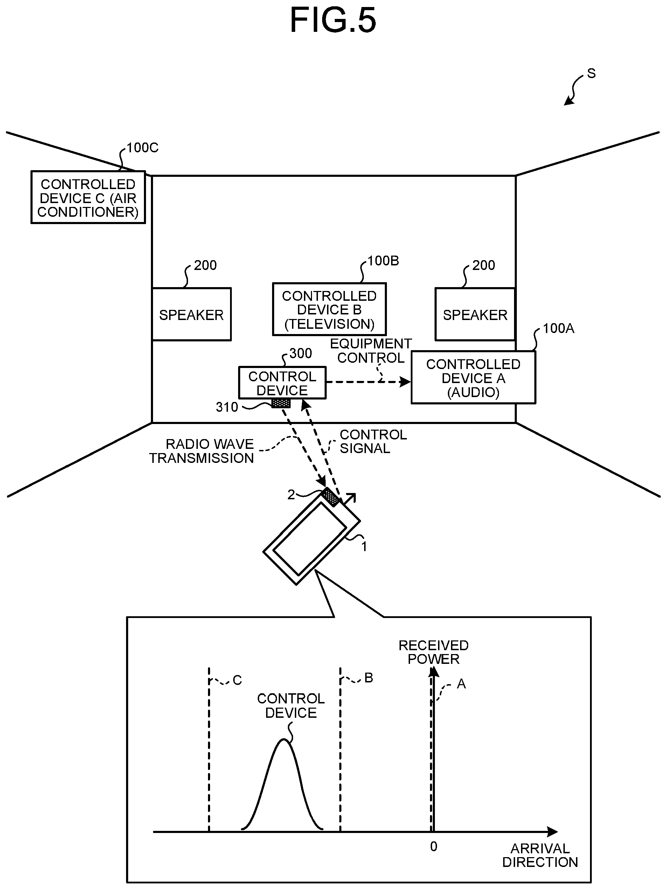

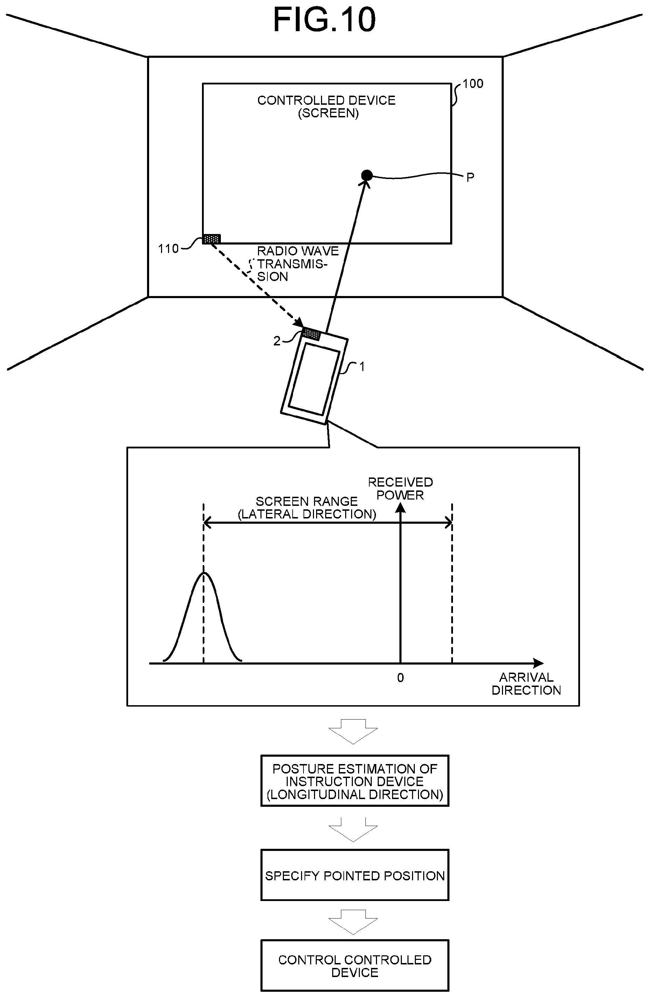

First to third embodiments are explained below with reference to the drawings. Specifically, a first embodiment is explained with reference to FIG. 1 to FIG. 4, a second embodiment is explained with reference to FIG. 5 to FIG. 9, and a third embodiment is explained with reference to FIG. 10 to FIG. 14.

### <<1. First Embodiment>>

First, an information processing device and an information processing method according to a first embodiment are explained with reference to FIG. 1 to FIG. 4. FIG. 1 is a diagram illustrating an overview of an information processing method according to the first embodiment. Note that the information processing method according to the first embodiment is executed by an instruction device 1 that is an information processing device.

FIG. 1 illustrates a control system S including an instruction device 1 that is an information processing device and controlled devices 100A to 100C (controlled devices A to C) controlled based on an instruction by the instruction device 1.

As illustrated in FIG. 1, the control system S includes a plurality of controlled devices 100A to 100C disposed in a predetermined space. In an example illustrated in FIG. 1, the controlled device 100A is an audio that controls an output of sound such as music from a speaker 200, the controlled device 100B is a television, and the controlled device 100C is an air conditioner. That is, the controlled devices 100A to 100C are electronic equipment fixedly disposed in predetermined positions in a space. Note that, in the following explanation, when the controlled devices 100A to 100C are not particularly distinguished, the controlled devices 100A to 100C are sometimes collectively referred to as controlled devices 100.

The instruction device 1 is a portable terminal device carried by a user. For example, the instruction device 1 is a smartphone.

In the control system S according to the embodiment, the user can switch the controlled device 100 to be controlled by physically directing the instruction device 1 to the controlled device 100.

Specifically, in the control system S, the controlled devices 100A to 100C include transmitting units 110A to 110C that transmit radio waves that are wireless signals of an ultra wide band (UWB) scheme. The instruction device 1 includes a receiving unit 2 that receives the radio waves.

First, in the information processing method according to the embodiment, the instruction device 1 receives radio waves transmitted from the controlled devices 100A to 100C with the receiving unit 2. Then, the instruction device 1 estimates an arrival direction of the radio wave based on the received radio wave.

In FIG. 1, the horizontal axis represents the arrival direction of radio waves A to C (radio waves corresponding to the controlled devices A to C) viewed from the instruction device 1 and the vertical axis represents the received power of the radio waves. For example, the arrival direction is represented by an arrival angle. Zero illustrated in FIG. 1 means that a radio wave is received from the front of the instruction device 1. The negative side with respect to zero means that a radio wave is received from the left side of the instruction device 1. The positive side with respect to zero means that a radio wave is received from the right side of the instruction device 1.

That is, in an estimation result of the arrival direction illustrated in FIG. 1, it can be seen that the instruction device 1 is directed to the controlled device 100A (the controlled device A). In such a case, the instruction device 1 displays a remote controller screen for controlling the controlled device 100A.

When receiving operation on the remote controller screen from the user, the instruction device 1 generates a control signal corresponding to such operation and transmits the control signal to the controlled device 100A. The controlled device 100A performs control based on the control signal. That is, the instruction device 1 controls the controlled device 100A (the controlled device A) based on an estimation result of the arrival direction.

Consequently, the user can control the controlled device 100 on the instruction device 1 side by directing the instruction device 1 to the controlled device 100 that the user desires to control. That is, with the information processing method according to the first embodiment, a plurality of controlled devices 100 can be controlled by one instruction device 1.

Further, by using the radio wave of the UWB scheme, even if an obstacle is present between the instruction device 1 and the controlled device 100, the instruction device 1 and the controlled device 100 can transmit and receive radio waves to and from each other. Therefore, it is possible to avoid the instruction device 1 becoming unable to control the controlled device 100.

As explained above, with the information processing method according to the first embodiment, equipment (the controlled device 100) can be highly accurately controlled.

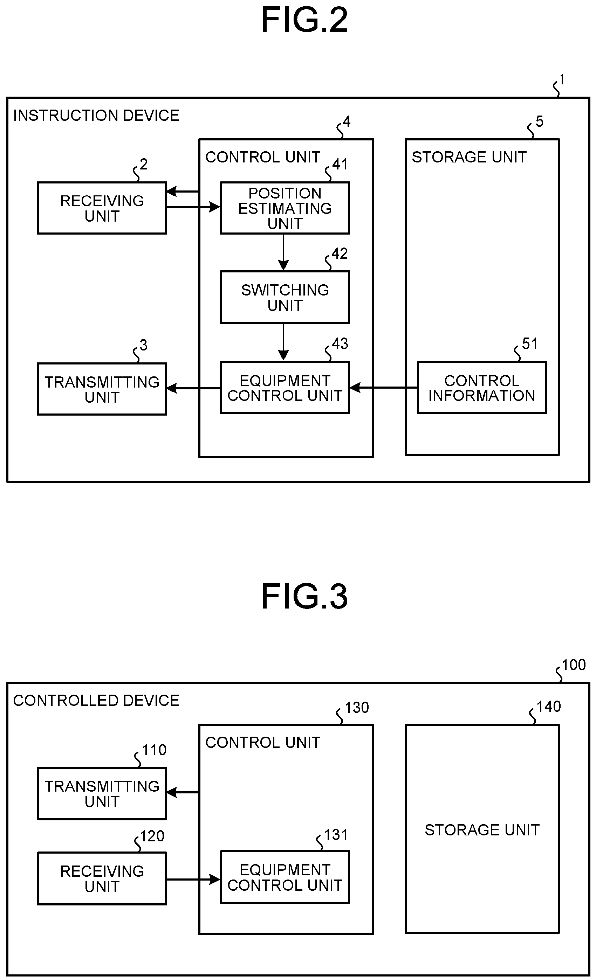

Subsequently, a configuration of the instruction device 1 according to the first embodiment is explained with reference to FIG. 2. FIG. 2 is a block diagram illustrating a configuration example of the instruction device 1 according to the first embodiment. As illustrated in FIG. 2, the instruction device 1 includes a receiving unit 2, a transmitting unit 3, a control unit 4, and a storage unit 5.

The receiving unit 2 receives a radio wave transmitted from the controlled device 100. The receiving unit 2 receives various kinds of information transmitted from the controlled device 100. The transmitting unit 3 transmits a radio wave to the controlled device 100. The transmitting unit 3 transmits a control signal generated by an equipment control unit 43 explained below, that is, a control signal for controlling the controlled device 100.

Here, the instruction device 1 includes, for example, a computer including a CPU (Central Processing Unit), a ROM (Read Only Memory), a RAM (Random Access Memory), a data flash, an input/output port and various circuits.

The CPU of the computer functions as a position estimating unit 41, a switching unit 42, and an equipment control unit 43 of the control unit 4, for example, by reading and executing a program stored in the ROM.

At least one or all of the position estimating unit 41, the switching unit 42, and the equipment control unit 43 of the control unit 4 can also be configured by hardware such as an ASIC (Application Specific Integrated Circuit) or an FPGA (Field Programmable Gate Array).

The storage unit 5 corresponds to, for example, a RAM or a flash memory. The RAM and the flash memory can store control information 51, information of various programs, and the like. Note that the instruction device 1 may acquire the programs and various kinds information via another computer or a portable recording medium connected by a wired or wireless network.

The control information 51 is information for controlling the controlled devices 100. For example, the control information 51 may be information registered by the user or may be automatically acquired from an external server based on a type (a television, an air conditioner, an audio, or the like), a model number, a product name, or the like of the controlled device 100. For example, the control information 51 includes information such as a remote controller screen for controlling the controlled device 100.

Subsequently, functional blocks (the position estimating unit 41, the switching unit 42, and the equipment control unit 43) of the control unit 4 is explained.

The position estimating unit 41 estimates an arrival position of a radio wave transmitted from the controlled device 100. Specifically, the position estimating unit 41 estimates an arrival direction of the radio wave using an AoA (Angle of Arrival) method. More specifically, the position estimating unit 41 estimates the arrival direction based on phase differences among radio waves respectively received by a plurality of antennas configuring the receiving unit 2.

The position estimating unit 41 estimates an arrival distance of a radio wave, that is, the distance between the instruction device 1 and the controlled device 100 using a ToF (Time of Flight) method. Specifically, the position estimating unit 41 estimates the distance based on an RTT (Round Trip Time) that is a time from transmission of a predetermined radio wave to the controlled device 100 until reception of a response to the radio wave.

The switching unit 42 switches the controlled device 100, which is a control target of the instruction device 1, based on the arrival position estimated by the position estimating unit 41. Specifically, the switching unit 42 switches, as a control target, the controlled device 100 that has transmitted a radio wave, an arrival direction of which (a position where reception power is a maximum value) is closest to 0 (front).

Note that the switching unit 42 does not switch a radio wave as a control target when an arrival direction of the radio wave is separated from zero by a predetermined value or more even if an arrival direction of the radio wave is the closest to 0. That is, the switching unit 42 prohibits switching of the control target to the controlled device 100 that has transmitted a radio wave, an arrival direction of which is separated from 0 by the predetermined value or more. Consequently, since the controlled device 100 not intended by the user is controlled as the control target, it is possible to reduce the user's confusion.

Even when an arrival direction is less than a predetermined value from zero, the switching unit 42 does not switch a radio wave as a control target if an arrival distance is a predetermined value or more. Consequently, for example, when the instruction device 1 is present outside a space where the controlled device 100 is present, it is possible to reduce erroneous control of the controlled device 100 from the outside.

The equipment control unit 43 controls the controlled device 100 based on an estimation result of the position estimating unit 41. Specifically, the equipment control unit 43 reads the control information 51 concerning the controlled device 100 after switching by the switching unit 42 from the storage unit 5 and displays a remote controller screen based on the control information 51 on a not-illustrated display unit.

Then, the equipment control unit 43 generates a control signal corresponding to operation received on the remote controller screen and transmits the control signal to the controlled device 100 set as a control target.

Subsequently, a configuration of the controlled device 100 according to the first embodiment is explained with reference to FIG. 3. FIG. 3 is a block diagram illustrating a configuration example of the controlled device 100 according to the first embodiment. As illustrated in FIG. 3, the controlled device 100 includes a transmitting unit 110, a receiving unit 120, a control unit 130, and a storage unit 140.

The transmitting unit 110 transmits a radio wave to instruction device 1. The transmitting unit 110 transmits various kinds of information to the instruction device 1. The receiving unit 120 receives a radio wave transmitted by instruction device 1. The receiving unit 120 receives a control signal transmitted from the instruction device 1 and outputs the control signal to the control unit 130.

Here, the controlled device 100 includes, for example, a computer including a CPU (Central Processing Unit), a ROM (Read Only Memory), a RAM (Random Access Memory), a data flash, an input/output port, and the like and various circuits.

The CPU of the computer functions as the equipment control unit 131 of the control unit 130, for example, by reading and executing a program stored in the ROM.

At least a part or the entire equipment control unit 131 of the control unit 130 can be configured by hardware such as an ASIC (Application Specific Integrated Circuit) or an FPGA (Field Programmable Gate Array).

The storage unit 140 corresponds to, for example, a RAM or a flash memory. The RAM and the flash memory can store, for example, information of various programs. Note that the controlled device 100 may acquire the programs and various kinds of information via another computer or portable recording medium connected by a wired or wireless network.

Subsequently, a functional block (the equipment control unit 131) of the control unit 130 is explained.

The equipment control unit 131 controls the units of the controlled device 100 based on the control signal received from the instruction device 1.

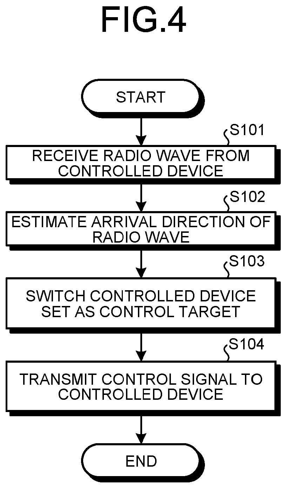

Subsequently, a procedure of processing executed by the instruction device 1 according to the first embodiment is explained with reference to FIG. 4. FIG. 4 is a flowchart illustrating a procedure of processing executed by the instruction device 1 according to the first embodiment.

As illustrated in FIG. 4, first, the instruction device 1 receives a radio wave from the controlled device 100 (step S101). Subsequently, the instruction device 1 estimates an arrival direction of the received radio wave (step S102). Subsequently, the instruction device 1 switches, based on an estimation result, the controlled device 100 set as a control target (step S103). Subsequently, the instruction device 1 transmits a control signal to the controlled device 100 set as the control target (step S104) and ends the processing. The controlled device 100 receives the control signal and performs control based on the control signal.

### <<2. Second Embodiment>>

Subsequently, an information processing device and an information processing method according to a second embodiment are explained with reference to FIG. 5 to FIG. 9. FIG. 5 is a diagram illustrating an overview of the information processing method according to the second embodiment.

As illustrated in FIG. 5, the control system S according to the second embodiment includes the instruction device 1, the controlled devices 100A to 100C, and a control device 300. That is, the control system S according to the second embodiment is different from the control system S according to the first embodiment in that the control system S further includes the control device 300 including a transmitting unit 310. The controlled devices 100A to 100C according to the second embodiment are different from the controlled devices 100A to 100C according to the first embodiment in that the controlled devices 100A to 100C according to the second embodiment do not include the transmitting units 110A to 110C.

Therefore, in the control system S according to the second embodiment, unlike the control system S according to the first embodiment, the controlled device 100 and the instruction device 1 do not directly communicate with each other, but the control device 300 that has received an instruction from the instruction device 1 controls the controlled device 100. That is, the instruction device 1 indirectly controls the controlled device 100 via the control device 300.

Specifically, in the control system S according to the second embodiment, the control device 300 transmits a radio wave and the instruction device 1 receives such a radio wave and estimates an arrival position of the received radio wave, that is, the position of the control device 300.

In an example illustrated in FIG. 5, it is assumed that a radio wave arrives further from the left side than the front (further from the negative side than zero) when viewed from the instruction device 1. It is assumed that the instruction device 1 stores relative positions of the controlled devices 100A to 100C with respect to the control device 300.

Specifically, "A" in a graph illustrated in FIG. 5 indicates the position of the controlled device 100A (the controlled device A), "B" indicates the position of the controlled device 100B (the controlled device B), and "C" indicates the position of the controlled device 100C (controlled device C).

That is, it can be seen from an estimation result illustrated in FIG. 5 that the instruction device 1 faces the controlled device 100A. In such a case, the instruction device 1 controls the controlled device 100A based on the estimation result.

Specifically, the instruction device 1 transmits a control signal for controlling the controlled device 100A to the control device 300. Subsequently, the control device 300 generates an instruction signal for instructing control of the controlled device 100A based on the control signal and transmits the instruction signal to the controlled device 100A.

Consequently, the user can control the controlled device 100 on the instruction device 1 side by directing the instruction device 1 to the controlled device 100 that the user desires to control. That is, with the information processing method according to the second embodiment, a plurality of controlled devices 100 can be controlled by one instruction device 1.

Further, by using a radio wave of the UWB scheme, even if an obstacle is present between the instruction device 1 and the control device 300, the instruction device 1 and the control device 300 can transmit and receive radio waves to and from each other. Therefore, it is possible to avoid the instruction device 1 becoming unable to control the controlled device 100.

As explained above, with the information processing method according to the second embodiment, equipment (the controlled device 100) can be highly accurately controlled.

Further, in the control system S according to the second embodiment, even when the controlled device 100 does not have a function of transmitting a radio wave, since the control device 300 has a radio wave transmitting function, the instruction device 1 is capable of controlling the controlled device 100.

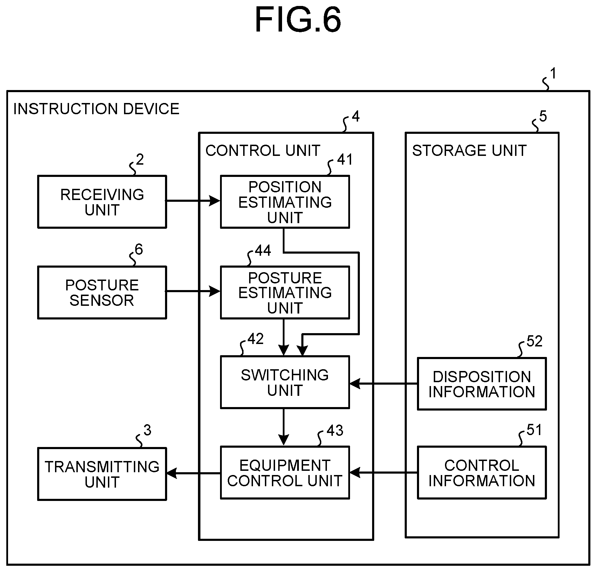

Subsequently, a configuration of the instruction device 1 according to the second embodiment is explained with reference to FIG. 6. FIG. 6 is a block diagram illustrating a configuration example of the instruction device 1 according to the second embodiment. As illustrated in FIG. 6, the instruction device 1 according to the second embodiment is different from the instruction device 1 according to the first embodiment in that the instruction device 1 according to the second embodiment further includes a posture sensor 6 and a posture estimating unit 44.

The storage unit 5 of the instruction device 1 according to the second embodiment is different from information stored in the storage unit 5 of the instruction device 1 according to the first embodiment in that the storage unit 5 of the instruction device 1 according to the second embodiment further stores disposition information 52.

The disposition information 52 is information concerning the disposition of the controlled device 100 and the control device 300. For example, the disposition information 52 can be represented with the position of the control device 300 as the origin in a three-dimensional space and with the positions of the controlled devices 100 as coordinates in the three-dimensional space.

Alternatively, the disposition information 52 may be represented as a direction in which the controlled device 100 is present and a distance to the controlled device 100 when viewed from the control device 300.

Note that the disposition information 52 may be acquired in advance from the control device 300 or the disposition information 52 may be generated by analyzing an image captured by a camera of the instruction device 1.

The posture sensor 6 is a sensor that detects the posture of the instruction device 1. As the posture sensor 6, for example, an acceleration sensor, a gyroscope, a geomagnetic sensor, or the like can be adopted. The posture sensor 6 detects, as the posture of the instruction device 1, information concerning an inclination in the gravity direction, an inclination in the geomagnetic direction, a rotation state, and the like.

The posture estimating unit 44 detects the posture of the instruction device 1 based on a detection result of the posture sensor 6. For example, the posture estimating unit 44 estimates an inclination in the gravity direction, an inclination in the geomagnetic direction, a rotation state, and the like. The posture estimating unit 44 outputs information concerning the estimated posture of the instruction device 1 to the equipment control unit 43.

Then, the equipment control unit 43 determines, based on the information concerning the posture estimated by the posture estimating unit 44 and an arrival position of a radio wave estimated by the position estimating unit 41, a position pointed by the instruction device 1, that is, the controlled device 100 set as a control target.

Then, the equipment control unit 43 transmits a control signal including information concerning the controlled device 100 set as the control target and control information for controlling the controlled device 100 to the control device 300.

Consequently, the control device 300 transmits, based on the control signal, an instruction signal corresponding to the control information to the controlled device 100 set as the control target, whereby the controlled device 100 is controlled.

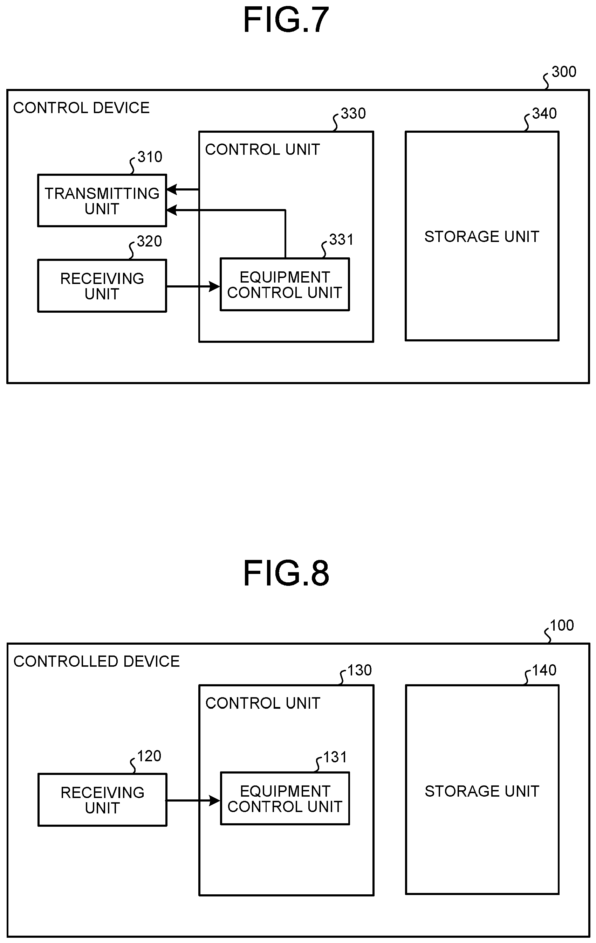

Subsequently, a configuration of the control device 300 according to the second embodiment is explained with reference to FIG. 7. FIG. 7 is a block diagram illustrating a configuration example of the control device 300 according to the second embodiment. As illustrated in FIG. 7, the control device 300 includes a transmitting unit 310, a receiving unit 320, a control unit 330, and a storage unit 340.

The transmitting unit 310 transmits a radio wave to the instruction device 1. The transmitting unit 310 transmits various kinds of information to the instruction device 1. The transmitting unit 310 transmits, to the controlled device 100, an instruction signal generated by an equipment control unit 331 explained below, that is, an instruction signal for instructing control of the controlled device 100. The receiving unit 320 receives a radio wave transmitted by instruction device 1. The receiving unit 320 receives a control signal transmitted from the instruction device 1 and outputs the control signal to the control unit 330.

Here, the control device 300 includes, for example, a computer including a CPU (Central Processing Unit), a ROM (Read Only Memory), a RAM (Random Access Memory), a data flash, an input/output port, and the like and various circuits.

The CPU of the computer functions as the equipment control unit 331 of the control unit 330, for example, by reading and executing a program stored in the ROM.

At least a part or the entire equipment control unit 331 of the control unit 330 can be configured by hardware such as an ASIC (Application Specific Integrated Circuit) or an FPGA (Field Programmable Gate Array).

The storage unit 340 corresponds to, for example, a RAM or a flash memory. The RAM and the flash memory can store, for example, information of various programs. Note that the control device 300 may acquire the programs and various kinds of information via another computer or a portable recording medium connected via a wired or wireless network.

Subsequently, a functional block (the equipment control unit 331) of the control unit 330 is explained.

The equipment control unit 331 controls, based on a control signal received from the instruction device 1, the controlled device 100 set as a control target. Specifically, the equipment control unit 331 specifies, based on the control signal, the controlled device 100 set as the control target and generates an instruction signal for controlling the specified controlled device 100.

Then, the equipment control unit 331 transmits the generated instruction signal to the controlled device 100 via the transmitting unit 310, for example, by infrared communication. As a result, the controlled device 100 can perform control corresponding to the instruction signal.

Subsequently, a configuration of the controlled device 100 according to the second embodiment is explained with reference to FIG. 8. FIG. 8 is a block diagram illustrating a configuration example of the controlled device 100 according to the second embodiment. As illustrated in FIG. 8, the controlled device 100 according to the second embodiment is different from the controlled device 100 according to the first embodiment in that the controlled device 100 according to the second embodiment does not include the transmitting unit 110.

In the second embodiment, the equipment control unit 131 performs various kinds of control of the controlled device 100 based on an instruction signal received from the control device 300.

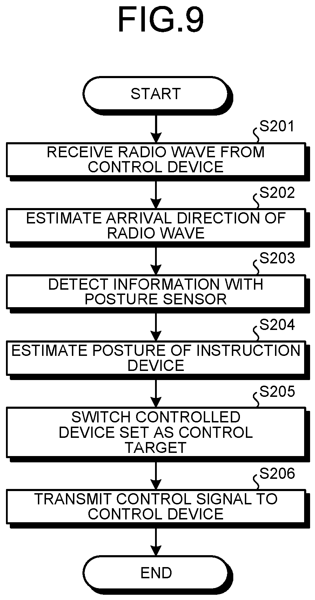

Subsequently, a procedure of processing executed by the instruction device 1 according to the second embodiment is explained with reference to FIG. 9. FIG. 9 is a flowchart illustrating the procedure of the processing executed by the instruction device 1 according to the second embodiment.

As illustrated in FIG. 9, first, the instruction device 1 receives a radio wave from control device 300 (step S201). Subsequently, the instruction device 1 estimates an arrival direction of the received radio wave (step S202). Subsequently, the instruction device 1 detects information concerning the posture of the instruction device 1 with the posture sensor 6 (step S203). Subsequently, the instruction device 1 estimates a posture of the instruction device 1 based on the detected information of the posture sensor 6 (step S204). Subsequently, the instruction device 1 switches, based on an estimation result, the controlled device 100 set as a control target (step S205). Subsequently, the instruction device 1 transmits a control signal for controlling the controlled device 100 set as the control target to the control device 300 (step S206), and ends the processing. The control device 300 controls the controlled device 100 by generating an instruction signal for instructing control of the controlled device 100 based on the received control signal and transmitting the instruction signal to the controlled device 100.

<<3. Third claimed Embodiment>> Subsequently, an information processing device and an information processing method according to a third embodiment are explained with reference to FIG. 10 to FIG. 14. FIG. 10 is a diagram illustrating an overview of the information processing method according to the third embodiment.

In FIG. 10, for example, an example is explained in which the controlled device 100 including a screen having a television function or the like displays a pointed position P of the instruction device 1 on the screen. That is, in the third embodiment, a case in which the instruction device 1 functions as an instruction device that points a specific position of the controlled device 100 is explained.

Specifically, the instruction device 1 transmits information concerning the pointed position P, which is a position pointed by the instruction device 1, to the controlled device 100. Then, the controlled device 100 displays a display component such as a cursor in the position of the pointed position P on the screen.

More specifically, first, the instruction device 1 receives a radio wave transmitted from the transmitting unit 110 included in the controlled device 100. Subsequently, the instruction device 1 estimates an arrival direction (in the lateral direction) of the received radio wave. In the example illustrated in FIG. 10, it is assumed that a radio wave is received from the left side (the negative side) with respect to the front (0) of instruction device 1.

As illustrated in FIG. 10, the instruction device 1 stores range information indicating a positional relation between a screen range (in the lateral direction) of the controlled device 100 and the transmitting unit 110. In the example illustrated in FIG. 10, a case in which the transmitting unit 110 is disposed at the lower left corner of the controlled device 100 is illustrated. That is, it is assumed that the screen spreads to the right side with respect to the arrival direction of the radio wave when viewed from the instruction device 1.

Then, the instruction device 1 specifies a position of the pointed position P in the lateral direction from the estimated arrival direction of the radio wave and the range information stored in advance. Specifically, the instruction device 1 specifies, as the lateral direction of pointed position P, a position of the front of instruction device 1 (a position where the arrival direction is zero) in in the range of the screen range in the lateral direction.

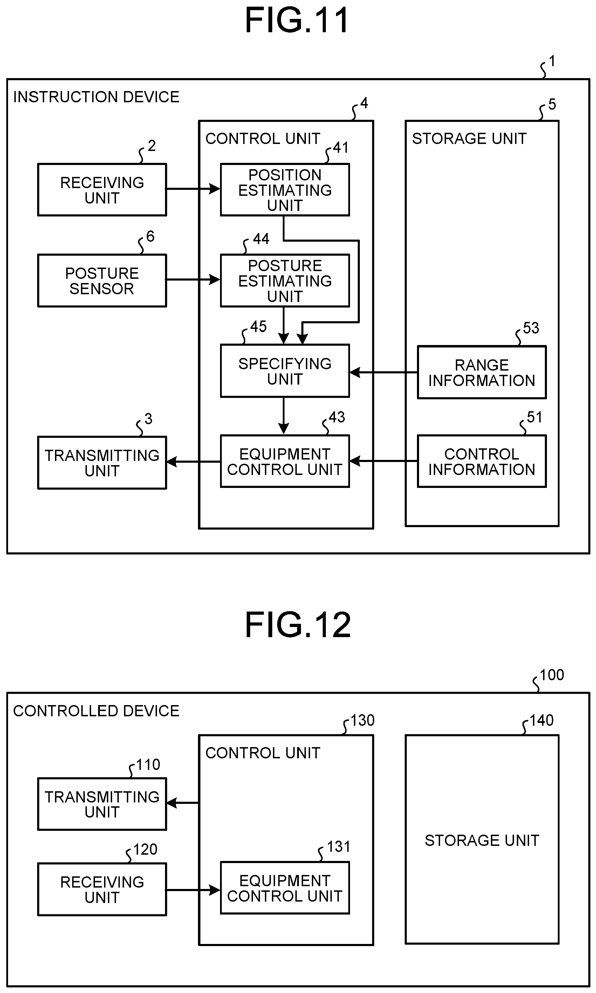

The instruction device 1 includes the posture sensor 6 (see FIG. 11) and estimates a posture of the instruction device 1 based on detected information of the posture sensor 6. That is, the instruction device 1 specifies a position of the pointed position P in the longitudinal direction based on the detected information of the posture sensor 6.

The instruction device 1 transmits information concerning the specified position in the lateral direction and the specified position in the longitudinal direction of the pointed position P to the controlled device 100 to cause the controlled device 100 to display a display component such as a cursor in the position of the pointed position P.

Consequently, by directing the instruction device 1 to a position that the user desires to point, it is possible to cause the controlled device 100 to display the pointed position P, which is the position pointed by the instruction device 1. In the information processing method according to the third embodiment, compared with when communication is performed using conventional light for performing communication using radio waves between the instruction device 1 and the controlled device 100, stable communication can be performed even when a shielding object is present.

Therefore, with the information processing method according to the third embodiment, equipment (the controlled device 100) can be highly accurately controlled.

Subsequently, a configuration of the instruction device 1 according to the third embodiment is explained with reference to FIG. 11. FIG. 11 is a block diagram illustrating a configuration example of the instruction device 1 according to the third embodiment. As illustrated in FIG. 11, the instruction device 1 according to the third embodiment is different from the instruction device 1 according to the second embodiment in that the instruction device 1 according to the third embodiment includes a specifying unit 45 instead of the switching unit 42.

The storage unit 5 of the instruction device 1 according to the third embodiment is different from the storage unit 5 of the instruction device 1 according to the second embodiment in that the storage unit 5 of the instruction device 1 according to the third embodiment stores range information 53 instead of the disposition information 52 stored in the storage unit 5 of the instruction device 1 according to the second embodiment.

The range information 53 is information indicating a range in which the pointed position P can be displayed in the controlled device 100 and includes information concerning a positional relationship between such a range and the transmitting unit 110 of the controlled device 100.

The specifying unit 45 specifies, based on an arrival position (an arrival direction and an arrival distance) of a radio wave estimated by the position estimating unit 41 and a posture of the instruction device 1 estimated by the posture estimating unit 44, the pointed position P pointed by the instruction device 1.

Then, the equipment control unit 43 transmits information concerning the pointed position P specified by the specifying unit 45 to the controlled device 100. Consequently, predetermined information concerning a display component such as a cursor is displayed in the position of the pointed position P by the controlled device 100.

For example, the equipment control unit 43 can transmit predetermined text information to the controlled device 100 together with the information concerning the pointed position P. Consequently, the controlled device 100 can display the text information in the position of the pointed position P.

For example, the equipment control unit 43 can select displayed information concerning the controlled device 100 with the pointed position P and take the information into the instruction device 1. For example, the equipment control unit 43 can acquire coupon information from the controlled device 100 by selecting, with the pointed position P, the coupon information displayed on the controlled device 100.

That is, the equipment control unit 43 controls the controlled device 100 by transmitting an acquisition request for acquiring predetermined information (coupon information) displayed in the pointed position P in the controlled device 100 together with the specified information concerning the pointed position P.

Besides the coupon information, the equipment control unit 43 can perform, with the pointed position P, for example, processing of selecting a commodity displayed on the controlled device 100 and paying the price.

Furthermore, for example, when an electronic map is displayed on the controlled device 100, the equipment control unit 43 can acquire information concerning route guidance from a current location to a destination. Specifically, first, the equipment control unit 43 points the current position with the pointed position P and then points the destination with the pointed position P. Then, the controlled device 100 transmits information from the current position pointed by the pointed position P to the destination pointed by the pointed position P to the controlled device 100 and transmits the information to the instruction device 1. Consequently, the information concerning the route guidance can be acquired by pointing to the pointed position P.

For example, the equipment control unit 43 can purchase a product by pointing to the product displayed on an outdoor advertisement with the pointed position P. Furthermore, at this time, since it is likely that the pointed position P cannot be accurately grasped by the user as in the screen, for example, the equipment control unit 43 may perform predetermined display, light emission, or vibration when transmitting the pointed position P.

Subsequently, a configuration of the controlled device 100 according to the third embodiment is explained with reference to FIG. 12. FIG. 12 is a block diagram illustrating a configuration example of the controlled device 100 according to the third embodiment. As illustrated in FIG. 12, the controlled device 100 according to the third embodiment has the same block configuration as the controlled device 100 according to the first embodiment but is different in functions of the functional blocks.

Specifically, the equipment control unit 131 displays predetermined information in the pointed position P in a predetermined range by acquiring the information concerning the pointed position P from the instruction device 1. The equipment control unit 131 may transmit information displayed in the position of the pointed position P to the instruction device 1.

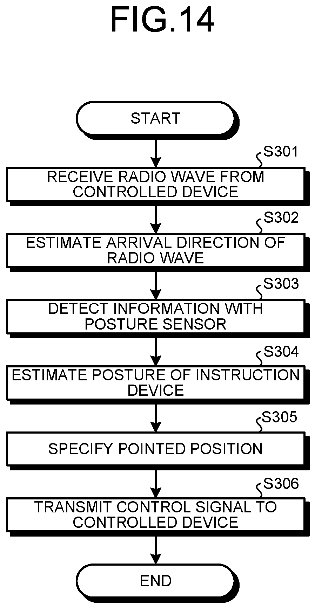

Subsequently, a procedure of processing executed by the instruction device 1 according to the third embodiment is explained with reference to FIG. 14. FIG. 14 is a flowchart illustrating the procedure of the processing executed by the instruction device 1 according to the third embodiment.

As illustrated in FIG. 14, first, the instruction device 1 receives a radio wave from the controlled device 100 (step S301). Subsequently, the instruction device 1 estimates an arrival direction of the received radio wave (step S102). Subsequently, the instruction device 1 detects information concerning the posture of the instruction device 1 with the posture sensor 6 (step S303). Subsequently, the instruction device 1 estimates a posture of the instruction device 1 based on the detected information of the posture sensor 6 (step S304). Subsequently, the instruction device 1 specifies, based on an estimation result, a pointed position in the controlled device 100 (step S305). Subsequently, the instruction device 1 transmits a control signal to the controlled device 100 (step S306) and ends the processing. The controlled device 100 receives the control signal and performs, based on the control signal, control to display predetermined information in a position corresponding to the pointed position P.

As explained above, the instruction device 1 according to the first to third embodiments includes the receiving unit 2, the position estimating unit 41, and the equipment control unit 43. When the controlled device 100 is controlled based on an instruction by the instruction device 1, the receiving unit 2 receives a radio wave transmitted from a predetermined device. The position estimating unit 41 estimates an arrival direction of the radio wave based on the radio wave received by the receiving unit 2. The equipment control unit 43 controls the controlled device 100 based on an estimation result of the position estimating unit 41.

Note that, in the third embodiment explained above, a case in which the instruction device 1 functioning as the information processing device estimates an arrival direction of a radio wave and specifies the pointed position P is explained. However, as claimed, the controlled device 100 or the control device 300 functions as the information processing device and estimates an arrival direction of a radio wave from the instruction device 1 and specifies the pointed position P.

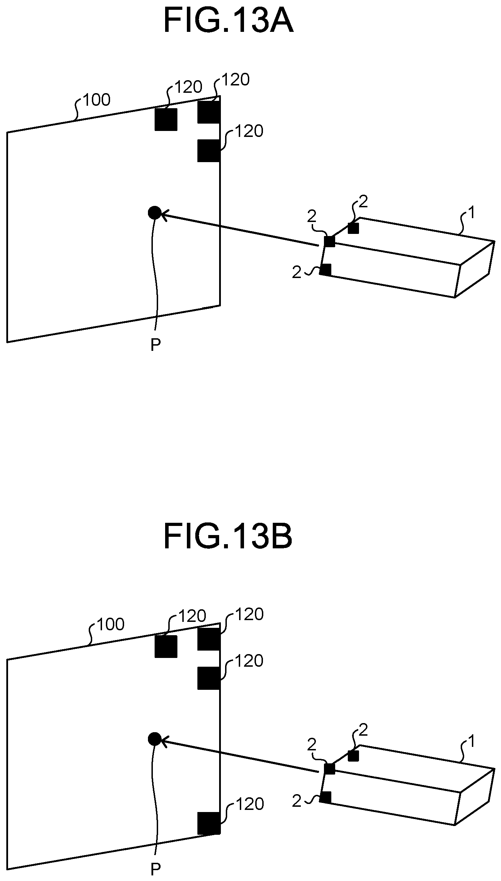

Here, specifying processing for the pointed position P by the controlled device 100 is explained with reference to FIGS. 13A to 13D. FIGS. 13A to 13D are diagrams illustrating specifying processing for the pointed position P by the controlled device 100. Note that, in FIGS. 13A to 13D, the controlled device 100 is taken as an example. However, the control device 300 may be used as the controlled device 100. In FIGS. 13A to 13D, the positions of the receiving units 120 disposed in the controlled device 100 are different from one another.

First, FIG. 13A is explained. FIG. 13A illustrates a case in which the controlled device 100 includes a plurality of receiving units 120 and one receiving unit 120 among these receiving units 120 performs distance measurement by ToF.

For example, in FIG. 13A, three receiving units 120 are disposed in the upper right corner of the controlled device 100, which is a screen. Specifically, one receiving unit 120 is disposed at the upper right corner of the controlled device 100 and the remaining two receiving units 120 are respectively disposed on the lower side and the left side with respect to the one receiving unit 120.

Then, the controlled device 100 performs distance measurement by ToF with one receiving unit 120 among the three receiving units 120 to estimate the distance (arrival distance) to the instruction device 1. The controlled device 100 estimates an arrival direction of a radio wave in the lateral direction from a phase difference between radio waves respectively received by the two receiving units 120 disposed in the lateral direction among the three receiving units 120.

The controlled device 100 estimates an arrival direction of a radio wave in the longitudinal direction from a phase difference between radio waves respectively received by the two receiving units 120 disposed in the longitudinal direction among the three receiving units 120. As a result, the arrival positions of the radio waves (the positions of the instruction device 1) in the lateral direction and the longitudinal direction are specified. The controlled device 100 acquires information concerning a posture from the instruction device 1 and specifies the pointed position P of the instruction device 1 in the controlled device 100 from such information concerning the posture and the estimated position of the instruction device 1.

Note that, as illustrated in FIG. 13A, in the instruction device 1, a plurality of receiving units 2 are disposed to be arranged two each in each of the longitudinal direction and the lateral direction. The plurality of receiving units 2 specify information concerning a direction (a longitudinal direction and a lateral direction) of the instruction device 1 with respect to the controlled device 100, that is, the posture of the instruction device 1.

Subsequently, FIG. 13B is explained. FIG. 13B illustrates a case in which the controlled device 100 includes a plurality of receiving units 120 and distance measurement by ToF is performed by two receiving units 120 among these receiving units 120.

For example, in FIG. 13B, three receiving units 120 are disposed in the upper right corner of the controlled device 100, which is a screen. Note that such disposition of the three receiving units 120 is the same as the disposition illustrated in FIG. 13A. Further, in FIG. 13B, one receiving unit 120 is disposed at the lower right corner of the controlled device 100.

Then, the controlled device 100 performs distance measurement by ToF with one receiving unit 120 among the three receiving units 120 in the upper right corner and one receiving unit 120 at the lower right corner to estimate a distance (an arrival distance) to the instruction device 1 and an arrival direction of a radio wave in the longitudinal direction. The controlled device 100 estimates an arrival direction of a radio wave in the lateral direction from a phase difference between radio waves respectively received by the two receiving units 120 disposed in the lateral direction among the three receiving units 120.

As a result, the arrival positions of the radio waves (the positions of the instruction device 1) in the lateral direction and the longitudinal direction are specified. The controlled device 100 acquires information concerning a posture from the instruction device 1 and specifies the pointed position P of the instruction device 1 in the controlled device 100 from such information concerning the posture and the estimated position of the instruction device 1.

Note that, as illustrated in FIG. 13B, in the instruction device 1, a plurality of receiving units 2 are disposed to be arranged two each in each of the longitudinal direction and the lateral direction. The plurality of receiving units 2 specify information concerning the direction (the longitudinal direction and the lateral direction) of the instruction device 1 with respect to the controlled device 100, that is, information concerning the posture of the instruction device 1.

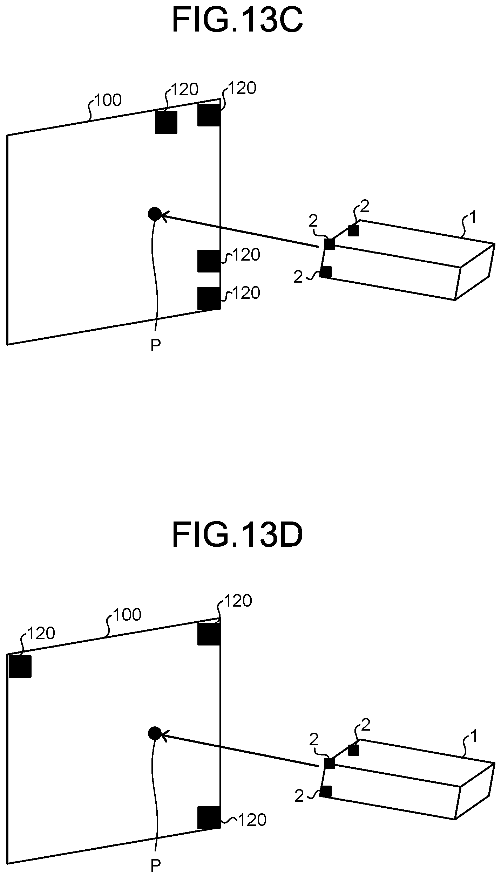

Subsequently, FIG. 13C is explained. FIG. 13C illustrates a case in which the controlled device 100 includes a plurality of receiving units 120 and distance measurement by ToF is performed by two receiving units 120 among these receiving units 120.

For example, in FIG. 13C, two receiving units 120 are disposed side by side in the lateral direction at the upper right corner of the controlled device 100, which is a screen. In FIG. 13C, two receiving units 120 are disposed side by side in the longitudinal direction at the lower right corner of the controlled device 100.

The controlled device 100 performs distance measurement by ToF with one receiving unit 120 of the two receiving units 120 at the upper right corner and one receiving unit 120 of the two receiving units 120 at the lower right corner to estimate the distance (the arrival distance) to the instruction device 1. The controlled device 100 estimates an arrival direction of a radio wave in the lateral direction with a phase difference between radio waves respective received by the two receiving units 120 disposed in the lateral direction at the upper right corner. The controlled device 100 estimates an arrival direction of a radio wave in the longitudinal direction with a phase difference between radio waves respectively received by the two receiving units 120 disposed in the longitudinal direction at the lower right corner.

As a result, the arrival positions of the radio waves (the positions of the instruction device 1) in the lateral direction and the longitudinal direction are specified. The controlled device 100 acquires information concerning a posture from the instruction device 1 and specifies the pointed position P of the instruction device 1 in the controlled device 100 from such information concerning the posture and the estimated position of the instruction device 1.

Note that, as illustrated in FIG. 13C, in the instruction device 1, a plurality of receiving units 2 are disposed to be arranged two each in each of the longitudinal direction and the lateral direction. Such a plurality of receiving units 2 specify the direction (the longitudinal direction and the lateral direction) of the instruction device 1 with respect to the controlled device 100, that is, information concerning the posture of the instruction device 1.

Subsequently, FIG. 13D is explained. FIG. 13D illustrates a case in which the controlled device 100 includes three receiving units 120 and distance measurement by ToF is performed by each of the three receiving units 120.

For example, in FIG. 13D, one receiving unit 120 is disposed at each of the upper right corner, the lower right corner, and the upper left corner of the controlled device 100, which is a screen.

The controlled device 100 performs distance measurement by ToF with the receiving units 120 at the upper left corner and the upper right corner to estimate a distance (an arrival distance) to the instruction device 1 and an arrival direction of a radio wave in the lateral direction. The controlled device 100 performs distance measurement by ToF with the receiving unit 120 at the upper right corner and the lower right corner to estimate a distance (an arrival distance) to the instruction device 1 and an arrival direction of a radio wave in the longitudinal direction.

As a result, the arrival positions of the radio waves (the positions of the instruction device 1) in the lateral direction and the longitudinal direction are specified. The controlled device 100 acquires information concerning a posture from the instruction device 1 and specifies the pointed position P of the instruction device 1 in the controlled device 100 from such information concerning the posture and the estimated position of the instruction device 1.

Note that, as illustrated in FIG. 13D, in the instruction device 1, a plurality receiving units 2 are disposed to be arranged two each in each of the longitudinal direction and the lateral direction and such a plurality of receiving units 2 specify information concerning the orientation (the longitudinal direction and the lateral direction) of the instruction device 1 with respect to the controlled device 100, that is, information concerning the posture of the instruction device 1.

Note that, in FIGS. 13A to 13D, the direction of the instruction device 1 estimated using the three receiving units 2 of the instruction device 1 is set as the information concerning the posture of the instruction device 1. However, for example, detected information of the posture sensor 6 included in the instruction device 1 may be set as the information concerning the posture.

Among the kinds of processes explained in the embodiments explained above, all or a part of the processing explained as being automatically performed can also be manually performed or all or a part of the processing explained as being manually performed can be automatically performed by a publicly-known method. Besides, the processing procedure, the specific names, and the information including the various data and parameters explained in the document and illustrated in the drawings can be optionally changed except when specifically noted otherwise. For example, the various kinds of information illustrated in the figures are not limited to the illustrated information.

The illustrated components of the devices are functionally conceptual and are not always required to be physically configured as illustrated in the figures. That is, specific forms of distribution and integration of the devices are not limited to the illustrated forms and all or a part thereof can be functionally or physically distributed and integrated in any unit according to various loads, usage situations, and the like.

The embodiments explained above can be combined as appropriate in a range for not causing the processing contents to contradict one another. Furthermore, the order of the steps illustrated in the flowcharts and the sequence charts in the embodiments explained above can be changed as appropriate.

### <<5. Summary>>

As described above, according to an embodiment of the present disclosure, the information processing device includes the receiving unit 2, the position estimating unit 41, and the equipment control unit 43. When the controlled device 100 is controlled based on an instruction by the instruction device 1, the receiving unit 2 receives a radio wave transmitted from a predetermined device. The position estimating unit 41 estimates an arrival direction of the radio wave based on the radio wave received by the receiving unit 2. The equipment control unit 43 controls the controlled device 100 based on an estimation result of the position estimating unit 41. Consequently, equipment (the controlled device 100) can be highly accurately controlled.

Although the embodiments of the present disclosure are explained above, the technical scope of the present disclosure is not limited to the embodiments per se. In addition, the components described in the different embodiments and modifications may be combined as appropriate.

The effects in the embodiments described in the present specification are only examples and are not limited and other effects may be present.

### Reference Signs List

- 1: INSTRUCTION DEVICE
- 2: RECEIVING UNIT
- 3: TRANSMITTING UNIT
- 4: CONTROL UNIT
- 5: STORAGE UNIT
- 6: POSTURE SENSOR
- 40: NETWORK
- 41: POSITION ESTIMATING UNIT
- 42: SWITCHING UNIT
- 43: EQUIPMENT CONTROL UNIT
- 44: POSTURE ESTIMATING UNIT
- 45: SPECIFYING UNIT
- 51: CONTROL INFORMATION
- 52: DISPOSITION INFORMATION
- 53: RANGE INFORMATION
- 100: CONTROLLED DEVICE
- 110: TRANSMITTING UNIT
- 120: RECEIVING UNIT
- 130: CONTROL UNIT
- 131: EQUIPMENT CONTROL UNIT
- 140: STORAGE UNIT
- 200: SPEAKER
- 300: CONTROL DEVICE
- 310: TRANSMITTING UNIT
- 320: RECEIVING UNIT
- 330: CONTROL UNIT
- 331: EQUIPMENT CONTROL UNIT
- 340: STORAGE UNIT
- S: CONTROL SYSTEM

## Claims

1. An information processing device comprising:
a plurality of receiving units (120) in each of a lateral and longitudinal direction that receive a radio wave transmitted from a predetermined device when a controlled device (100) is controlled based on an instruction from an instruction device (1);
a position estimating unit that is configured to estimate an arrival direction of the radio wave based on the radio wave received by the receiving unit; and
an equipment control unit (131) that is configured to control the controlled device based on an estimation result of the position estimating unit;
wherein
the information processing device is a controlled device or a control device that is configured to control the controlled device, the controlled device comprising a screen
the receiving units are configured to
receive the radio wave from the instruction device,
the position estimating unit is configured to estimate an arrival direction of the radio wave in each of a lateral and longitudinal direction, and
the equipment control unit is configured to control the controlled device to display on the screen a display component at a pointed position based on the arrival direction and information concerning a posture of the instruction device acquired from the instruction device.

2. An information processing method comprising
a receiving step of receiving, by a plurality of receiving units (120) in each of a lateral and longitudinal direction, a radio wave transmitted from a predetermined device when a controlled device (100) is controlled based on an instruction from the instruction device (1);
a position estimating step of estimating an arrival direction of the radio wave based on the radio wave received by the receiving step; and
an equipment control step of controlling the controlled device based on an estimation result of the position estimating step;
the method comprising:
receiving the radio wave from the instruction device,
estimating an arrival direction of the radio wave in each of a lateral and longitudinal direction, and
controlling a screen of the controlled device to display a display component at a pointed position based on the arrival direction and information concerning a posture of the instruction device acquired from the instruction device.

## Patentansprüche

1. Informationsverarbeitungsvorrichtung, umfassend:
eine Vielzahl von Empfangseinheiten (120) jeweils in einer Querrichtung und einer Längsrichtung, die eine von einer vorbestimmten Vorrichtung gesendete Funkwelle empfangen, wenn eine gesteuerte Vorrichtung (100) basierend auf einer Anweisung von einer Anweisungsvorrichtung (1) gesteuert wird;
eine Positionsschätzeinheit, die konfiguriert ist, um eine Ankunftsrichtung der Funkwelle basierend auf der durch die Empfangseinheit empfangenen Funkwelle zu schätzen; und
eine Ausrüstungssteuereinheit (131), die konfiguriert ist, um die gesteuerte Vorrichtung basierend auf einem Schätzergebnis der Positionsschätzeinheit zu steuern;
wobei die Informationsverarbeitungsvorrichtung eine gesteuerte Vorrichtung oder eine Steuereinrichtung ist, die konfiguriert ist, um die gesteuerte Vorrichtung zu steuern, wobei die gesteuerte Vorrichtung einen Bildschirm umfasst, wobei die Empfangseinheiten konfiguriert sind, um die Funkwelle von der Anweisungsvorrichtung zu empfangen,
die Positionsschätzeinheit konfiguriert ist, um eine Ankunftsrichtung der Funkwelle jeweils in einer Quer- und Längsrichtung zu schätzen, und
die Vorrichtungssteuereinheit konfiguriert ist, um die gesteuerte Vorrichtung zu steuern, um auf dem Bildschirm eine Anzeigekomponente an einer Zeigeposition basierend auf der Ankunftsrichtung und von der Anweisungsvorrichtung erlangten Informationen bezüglich einer Haltung der Anweisungsvorrichtung anzuzeigen.

2. Informationsverarbeitungsverfahren, umfassend:
einen Empfangsschritt des Empfangens einer von einer vorbestimmten Vorrichtung gesendeten Funkwelle durch eine Vielzahl von Empfangseinheiten (120) in jeweils einer Quer- und Längsrichtung, wenn eine gesteuerte Vorrichtung (100) basierend auf einer Anweisung von der Anweisungsvorrichtung (1) gesteuert wird;
einen Positionsschätzschritt zum Schätzen einer Ankunftsrichtung der Funkwelle basierend auf der durch den Empfangsschritt empfangenen Funkwelle; und
einen Ausrüstungssteuerschritt zum Steuern der gesteuerten Vorrichtung basierend auf einem Schätzergebnis des Positionsschätzschritts;
das Verfahren umfassend:
Empfangen der Funkwelle von der Anweisungsvorrichtung,
Schätzen einer Ankunftsrichtung der Funkwelle in jeweils einer Quer- und Längsrichtung, und
Steuern eines Bildschirms der gesteuerten Vorrichtung zum Anzeigen einer Anzeigekomponente an einer anvisierten Position basierend auf der Ankunftsrichtung und Informationen bezüglich einer Haltung der Anweisungsvorrichtung, die von der Anweisungsvorrichtung erfasst werden.

## Revendications

1. Dispositif de traitement d'informations comprenant :
une pluralité d'unités de réception (120) dans chacune d'une direction latérale et longitudinale qui reçoivent une onde radio transmise à partir d'un dispositif prédéterminé lorsqu'un dispositif commandé (100) est commandé sur la base d'une instruction provenant d'un dispositif d'instruction (1) ;
une unité d'estimation de position qui est configurée pour estimer une direction d'arrivée de l'onde radio sur la base de l'onde radio reçue par l'unité de réception ; et
une unité de commande d'équipement (131) qui est configurée pour commander le dispositif commandé sur la base d'un résultat d'estimation de l'unité d'estimation de position ;
dans lequel le dispositif de traitement d'informations est un dispositif commandé ou un dispositif de commande configuré pour commander le dispositif commandé, le dispositif commandé comprenant un écran, les unités de réception sont configurées pour recevoir l'onde radio en provenance du dispositif d'instruction,
l'unité d'estimation de position est configurée pour estimer une direction d'arrivée de l'onde radio dans chacune d'une direction latérale et longitudinale, et
l'unité de commande d'équipement est configurée pour commander le dispositif commandé pour afficher sur l'écran un composant d'affichage au niveau d'une position pointée sur la base de la direction d'arrivée et d'informations concernant une pose du dispositif d'instruction acquises auprès du dispositif d'instruction.

2. Procédé de traitement d'informations comprenant
une étape de réception consistant à recevoir, par une pluralité d'unités de réception (120) dans chacune d'une direction latérale et longitudinale, une onde radio transmise à partir d'un dispositif prédéterminé lorsqu'un dispositif commandé (100) est commandé sur la base d'une instruction provenant du dispositif d'instruction (1) ;
une étape d'estimation de position consistant à estimer une direction d'arrivée de l'onde radio sur la base de l'onde radio reçue par l'étape de réception ; et
une étape de commande d'équipement consistant à commander le dispositif commandé sur la base d'un résultat d'estimation de l'étape d'estimation de position ;
le procédé comprenant :
la réception de l'onde radio en provenance du dispositif d'instruction,
l'estimation d'une direction d'arrivée de l'onde radio dans chacune d'une direction latérale et longitudinale, et
la commande d'un écran du dispositif commandé pour afficher un composant d'affichage au niveau d'une position pointée sur la base de la direction d'arrivée et d'informations concernant une pose du dispositif d'instruction acquises auprès du dispositif d'instruction.
